# EUROPEAN PATENT APPLICATION

(11) **EP 3 859 390 A1**
(43) Date of publication of application: **04.08.2021**
(21) Application number: 20154365.9
(22) Date of filing: 29.01.2020
(51) Int. Cl.: G01S 13/931, G01S 17/931, G01S 13/86, G01S 17/89, G01S 17/86, G06T 15/04, G06T 17/00

(54) **METHOD AND SYSTEM FOR RENDERING A REPRESENTATION OF AN EVINRONMENT OF A VEHICLE**

(71) Applicant: Visteon Global Technologies, Inc., Van Buren Township, MI 48111-5711 (US)
(72) Inventor: TORSCHMIED, Axel, 75334 Straubenhardt (DE); PFEIFLE, Martin, 72297 Seewald (DE); ZELLER, Niclas, 85764 Oberschleißheim (DE)
(74) Representative: MERH-IP Matias Erny Reichl Hoffmann Patentanwälte PartG mbB

(57) **Abstract**

A method for rendering a representation of an environment of a vehicle (10) comprises a sensing step (A) including capturing, by a camera unit (14), an image of an environment of the vehicle (10). In an object detection and classification step (B), a point cloud from the captured image is extracted. In a parameter extraction step (C), one or more of the following parameters from the point cloud: object distances, object colors, object dimensions, and/or object types are extracted. A rendering step (D) of the method includes extracting (S3) points which belong to an object (2) from the point cloud; defining (S4), for each detected object (2), at least one of colors and textures of the object (2), based on the captured image and the extracted points of the object (2); tagging (S5) each detected object (2) with the extracted object type; and rendering (S6), for each detected object (2), a three-dimensional virtual object (3) in a three-dimensional scene (4) based on the extracted object distances. In a visualization step (E) the three-dimensional scene (4) is output to a display unit (13).

## Description

### TECHNICAL FIELD

One or more embodiments described herein relate to a method for rendering a representation of an environment of a vehicle, a system for rendering a representation of an environment of a vehicle, and a vehicle comprising a system for rendering a representation of an environment of the vehicle.

### BACKGROUND

A vehicle may include a conventional navigation system. The conventional navigation system includes a positioning component, such as a GPS/GNSS (Global Positioning System/Global Navigation Satellite System) receiver chip, for determining a location of the vehicle, relative to a coordinate system. The conventional navigation system further includes computer graphics stored in memory, such as graphical maps and icons. The conventional navigation system includes a display system. The display system includes a GUI (graphical user interface) for graphically representing navigational information to a user. Via the GUI, the navigation system may show a graphical map and a graphical symbol representing the vehicle on the graphical map. The navigation system shows the graphical symbol on the graphical map at a location on the graphical map that correlates to the location, obtained via the positioning component, of the vehicle.

Over time, the information in the conventional navigation system, such as the computer graphics stored in memory, may become outdated. Moreover, due to the vast amount of possible information relevant to navigation, as well as the dynamic nature of that information, such as razing a building, erecting a new structure, constructing a new roadway, etc., the information stored in memory may be incomplete or incorrect. The graphical representations, combined with outdated, incomplete, and incorrect information, may be unable to provide an accurate, realistic scene of an environment surrounding the vehicle.

The vehicle may also have a advanced driver assistance system (ADAS) that may highlight dynamic or static surrounding objects or landmarks in front, aside or behind the vehicle. This may be to inform the driver and passengers about the perceived surroundings - especially which objects are detected and / or which objects are relevant for the assist functions and or if relevant objects or landmarks are detected and / or if dangerous or critical objects are relevant for the driver or passengers to be informed about. Traditionally this surrounding scene may be composed with 3 dimensional objects in a virtual scene by feeding the scene with meta data derived from the sensors. The limitation of this solution is that objects or surroundings could only be categorized and displayed if these are known objects (i.e. cars, trucks, motorbikes, pedestrians, lanes, lines ect.). Unknown objects or landmarks (i.e. elevation, mountains, bridges) that may not be able to derive from a map may not be displayed.

The vehicle may further include a back-up assist system. The back-up assist system may include a camera mounted to the vehicle, such as within a rear-bumper region. The camera may have a field of view that is directed outward from the vehicle. As such, due to the field of view, the camera may capture images of an environment behind and outward to the vehicle. The back-up assist system may include a display system for showing the images captured from the camera. The images may be arranged as a video feed to the display system. This may allow a user to view the display system to see the environment behind and outward to the vehicle. The user, however, may be unable to selectively customize the images, such as in regard to objects within the image. As such, the display system may merely show the images in an all-or-nothing fashion.

### BRIEF SUMMARY OF THE INVENTION

Reliable and robust three-dimensional detection of objects in a surrounding of a vehicle is one of the fundamental requirements for autonomous driving. After all, in order to avoid collisions with pedestrians, cyclist, other vehicles, and/or other objects, the autonomous vehicle must be able to detect these obstacles in the first place. Thus, detection of three-dimensional objects is an essential task in autonomous driving. Recent techniques are successful at achieving highly accurate detection rates, provided that the three-dimensional input data is obtained using precise LiDAR (Light Detection And Ranging) technology.

Existing algorithms largely rely on LiDAR systems, which provide accurate three-dimensional point clouds of the environment surrounding the vehicle. Although highly precise, alternatives to LiDAR technology are desirable for a number of reasons. First of all, LiDAR technology is relatively expensive, which makes it a viable option only for premium vehicles. Secondly, for increasing reliability, an autonomous driving system should have diverse and/or redundant sensors, as opposed to relying too much on a single sensor. Thus, it would be advantageous to have at least one secondary sensor system to fall back onto in case of a failure.

One possible candidate are images captured by stereo or monocular cameras. Optical cameras are highly affordable (several orders of magnitude cheaper than LiDAR), operate at a high frame rate, and provide a density of information.

In today's applications including Advanced Driver Assistance Systems (ADAS), information on static or dynamic objects may be detected and displayed to an occupant of a vehicle. These objects can include static lanes (such as road surface markings) and/or three-dimensional objects that may be rendered into a virtual scene which is displayed to the occupant. Rendering of three-dimensional objects can be performed based on a fusion of sensor data provided by one or more sensors of the vehicle including LiDAR, a radar system, and one or more cameras. The virtual scene usually is a reduced model of the perceived surroundings of the vehicle and at best shows a simplified version of what the sensors perceive.

The information comprised in such a rendered virtual scene may comprise lane and line information, wherein road markings and the ego-lane that the vehicle is currently driving on may be displayed together with one or more adjacent lane(s). Furthermore, static objects such as barriers, road shoulders, buildings and/or other obstacles may be displayed. The scene may also display dynamic objects such as other road users including other vehicles or and/or pedestrians. Furthermore, the virtual scene may be integrated with additional information obtained from a map based on a digital terrain model (DTM) or three-dimensional city data adding information on static objects or landmarks such as buildings, elevation, mountains, bridges, etc.

Any information comprised in the virtual scene which is not generated based on the vehicle's sensors may be outdated, incorrect, or not reflecting real-world conditions due to missing movable (but stationary) objects such as parked vehicles, vegetation, ongoing construction, etc. Texture and color information of rendered objects may be reconstructed from mapping services such as Google street view with a likelihood of being outdated as well. Furthermore, also the accuracy of the representation with regard to the current viewpoint is usually limited since data usually needs to be morphed from a captured picture to the current viewpoint and may be outdated as well and depends on an accurate determination of the current location.

In a conventional method, objects in a captured image may be detected and a three-dimensional scene may be rendered by arranging and displaying generic three-dimensional models corresponding to the detected objects. Such a method may have the disadvantage that rendered scene deviates from the reality such that the occupant may not identify the correspondence between the real objects and the virtual objects.

The goal to be achieved by rendering a virtual scene of the vehicle's surroundings may include assisting the occupant of the vehicle to perceive the surrounding, in particular when visibility is poor, for example at night or due to an influence of the weather. Furthermore, a realistic representation of the surroundings in a rendered virtual scene allow an occupant to verify that the vehicle's sensors correctly perceive and recognize stationary and/or dynamic objects around the ego-vehicle. Thereby, the rendered scene may create a sense of trust in the autonomous driving system.

According to an aspect, a method for rendering a graphical representation of an environment of a vehicle comprises a sensing step including capturing, by a camera unit, an image of an environment of the vehicle. In particular, an image of the region in front of the vehicle may be captured such that objects in front of the vehicle may be detected in the captured image. Single images may be captured periodically such that a stream of images is generated. The rate at which images are captured may be high such that the stream of images may also be considered a video having a frame rate ranging from 30 and 60 frames per second for example.

According to an aspect, an object detection and classification step of the method may include extracting a point cloud from the captured image. In order to extract the point cloud, a known extraction algorithm may be applied. For example, brightness and/or color information of one or more pixels may be compared to the brightness and/or color information of neighboring pixels around the currently analyzed one or more pixels. A point cloud is a set of data points in three-dimensional space. In order to obtain a point cloud from an image, depth information needs to be added. This can be achieved, for example, by fusing the image data with distance information obtained by another sensor, such as a radar sensor. Alternatively, an algorithm based on SfM ("Structure from Motion") may be used which extracts depth information from images taken at different point in time while the vehicle to which the camera unit is mounted moves. For this purpose, motion information obtained from one or more motion and/or acceleration sensors of the vehicle and/or an odometer of the vehicle may be fused with the image data of the captured images. Furthermore, depth information of objects can be obtained by using a camera unit comprising a stereo camera.

According to an aspect, the object detection and classification step may be implemented using artificial intelligence. For example, a machine learning algorithm may be trained to detect and classify the objects using the point cloud or directly the captured image. In other words, pixel subsets of the image may be extracted and objects may be detected and classified from the pixel subsets using machine learning. For this purpose, neural networks may be applied.

According to an aspect, a parameter extraction step of the method includes extracting, for each detected object in the image, one or more parameters from the point cloud, including at least one of an object distance, an object color and/or texture, object dimensions, an object direction, and/or an object type. The object distance may be obtained from the depth information comprised in the extracted point cloud. The object color and/or texture of a surface of the object may include more than one color and/or texture. This information may be extracted from the color information of the pixels associated with the object in the captured image(s). By obtaining color and/or texture information, a more realistic three-dimensional model of the object may be rendered. A more realistically rendered model of the object has the advantage that it may be recognized more easily by human occupants. An object direction may include the direction the object, such as another vehicle, is currently moving or about to move. The direction an object is about to move may be derived from an intention which may be detected by recognizing patterns including activation of turn signals, steering movements, and/or lane markings. Such features may be analyzed using artificial intelligence including, for example, neural networks. The object type may be obtained by applying image recognition algorithms. This way the detected object(s) may be classified into one or more object type(s), for example one of: a vehicle, a motorcycle, a lorry, a bicycle, a pedestrian, a tree, a building, a road surface marking, a barrier, a bridge, a sign (post), etc. Furthermore, object dimensions can be obtained from the three-dimensional point cloud by measuring the distance between the outer edges of the detected object(s).

According to an aspect, a rendering step of the method includes extracting points which belong to an object from the point cloud. By extracting those points of the (three-dimensional) point cloud, a three-dimensional model of the object may be generated. This three-dimensional model may also include a direction of the object, which may be represented by a three-dimensional vector.

According to an aspect, the rendering step includes defining, for each detected object, at least one of colors and textures of the object, based on the captured image and the extracted points of the object. The parameters color and texture may also be obtained from the parameter extraction step.

According to an aspect, the rendering step includes tagging each detected object with the extracted object type. In particular, the object type may have been extracted in the parameter extraction step. Furthermore, an object which has been tagged a first time when the object is recognized may be recognized more easily when the vehicle passes by this object again at a second time.

According to an aspect, the rendering step includes rendering, for each detected object, a three-dimensional virtual object in a three-dimensional scene based on the extracted object distances. In this step, the three-dimensional graphical representation of the scene including the rendered three-dimensional models of the detected object(s) may be generated. In particular, the rendered objects may be arranged at positions relative to each other and relative to the vehicle such that a scene corresponding to the real world is created. This step may also comprise a step of adapting the perspective of the generated scene from a viewpoint of the camera unit to a viewpoint of an occupant of the vehicle.

According to an aspect, a visualization step of the method includes outputting the three-dimensional scene to a display unit. In particular, the scene is displayed on a screen of the display unit to an occupant of the vehicle. A level of detail of the displayed scene may be adjusted such that the scene may be displayed more or less realistically or more or less simplified. In other words, it may be possible for the occupant to set the level of detail from a level in which only objects which are essential for autonomous driving are displayed to a level in which all detected objects are displayed. Furthermore, the level of detail with regard to texture and/or color may be adjustable. A more simplified graphical representation may be easier to grasp than a complex scene with a high level of detail. Furthermore, a simplified scene may allow the driver to more quickly recognize possible hazards while driving the vehicle, such as, for example, a pedestrian crossing the road at night or a bicycle without lights driving at night.

According to an aspect, the sensing step further includes detecting distance information using a radar sensor. Alternatively, distance information of other range sensors including a laser sensor and/or radar in general or imaging radar in particular and / or one or more ultrasound sensors may obtained.

According to an aspect, the detected distance information is fused with the captured image to extract object distances. In particular, distance information may be fused with the image data such that distance information may be assigned to each pixel or each of a subset of pixels such that a three-dimensional point cloud may be generated. Furthermore, information of other sensors, other cameras, and/or information from a map, in particular a high-definition (HD) map, may be fused with the image data.

According to an aspect, the object detection and classification step further includes detecting objects in the generated point cloud.

According to an aspect, the parameter extraction step includes extracting the object dimensions and the object types from the detected objects. In particular, the parameter extraction step may be implemented using artificial intelligence and/or machine learning algorithms. For example, if a known object or object type such as a known model of automobile is detected, dimensions of the automobile may be known from a database. Alternatively or additionally, if an object with known dimensions is detected, the dimensions of other objects may be extracted by comparing the relative sizes of the objects.

According to an aspect, the object detection and classification step further includes detecting objects directly from the captured image.

According to an aspect, the parameter extraction step includes extracting the object dimensions and the object types from the detected objects. Furthermore, neural networks may be implemented in order to extract a direction of the detected objects. For example, the direction in which an object moves or is about to move may be detected, such as the direction in which a pedestrian, another car, a bicycle or another traffic participant may be moving or heading.

According to an aspect, the sensing step further includes detecting a position and an orientation of the vehicle and/or the camera unit when capturing the image. This information may be used, for example, when applying an SfM ("Structure from Motion) algorithm in order to obtain depth information from the images such that the point cloud can be extracted.

According to an aspect, the object detection and classification step further includes extracting static points in the image by comparing the captured image with another image captured at an earlier point in time. According to an aspect, the three-dimensional point cloud is generated from the static points. Furthermore, according to an aspect, also dynamic points, i.e. points of moving objects may be detected in the image such that moving objects may be detected.

According to an aspect, the rendering step further includes calculating a textured surface of the three-dimensional virtual objects by fusing distance information and point cloud information of each detected object and render them without the need of describing them in a parametric format. The rendering step may apply an aspect of mixing location data with textured objects which are detected using Structure from Motion. For example, a potentially dangerous object on the road such as a stationary vehicle or a piece of cargo fallen from a truck may be detected and a type and a location of the detected object may be sent to a server in order to share this information with other traffic participants. Together with this information a textured model of the object may be sent along so that in another traffic participant may receive a warning together with a rendered image of the detected object.

According to an aspect, the rendering step further includes fusing color information extracted from the captured image with the rendered three-dimensional virtual object.

According to an aspect, the rendering step further includes performing perspective transformation of the rendered three-dimensional virtual objects such that the virtual objects are displayed as seen from a point of view of an occupant of the vehicle.

According to an aspect, a system for rendering a graphical representation of an environment of a vehicle comprises a camera unit for capturing an image of an environment of the vehicle, a processing unit configured to execute a method according to at least one aspect described herein, and a display unit for displaying the three-dimensional scene.

According to an aspect, the camera unit comprises at least one forward-facing monocular camera or at least one stereo camera. In particular, the cameras may be configured to capture color images. Additionally, the camera unit may comprise at least one infrared camera, in particular for capturing images in dark conditions.

According to an aspect, the system further comprises a position sensor for detecting a position and an orientation of the vehicle and/or the camera unit when capturing the image.

According to an aspect, the system further comprises a sensor, in particular a radar sensor, for detecting a distance between the vehicle and the object. This way depth information may be recorded which may be fused with the image data in order to generate the point cloud.

According to an aspect a vehicle comprises a system according to an aspect described in the present disclosure.

According to an aspect, the vehicle includes a system for rendering a virtual scene of the vehicle's surroundings. The virtual scene may be of an environment around the vehicle. Furthermore, the virtual scene may include one or more objects and/or one or more types of objects within the environment around the vehicle.

An occupant of the vehicle may determine which objects and/or types of objects to render. For example, the occupant may want to have a particular landmark rendered, when in view, to the exclusion of all other objects. As another example, the occupant may want certain sets of types of objects rendered, such as lane markings, trees, etc., to the exclusion of all other sets of objects. Furthermore, the system may allow the occupant to create a user profile. In the user profile, the occupant may save his/her selective choices regarding objects and/or types of objects to render. That way, each time the occupant enters the vehicle, the occupant may be able to have the system load the user profile. In doing so, the system would render objects and/or types of objects based on the settings in the user profile. This may be a more efficient practice for the occupant, for the occupant may not have to re-evaluate and re-select each object and/or types of objects that the occupant wants the system to render.

According to an aspect, the system may comprise artificial intelligence which engages with a user by asking the type of object which has been detected. In particular, such a function may be carried out in a vehicle which is operating in an autonomous mode. This way the system may learn from the user to detect similar objects correctly in the future.

The system may present one or more types of objects to occupant, and the system may allow the occupant to select any, none, or all of the one or more types of objects. As a mathematical example, this may be described as follows: The system may present M sets of types of objects, where M is a positive integer. When the occupant does not want to see any objects or types of objects, the occupant may select none of the M sets. Alternatively stated, the occupant may unselect all of the M sets such that none of the M sets would be selected, and therefore no objects or types of objects would be shown in the virtual scene. When the occupant does want to see objects or types of objects, the occupant may select N sets of types of objects, where N is a positive integer and is less than or equal to M. The selected N sets would be shown in the virtual scene.

As such, the virtual scene may be selectively determined by the occupant. This may assist the occupant of the vehicle to perceive the vehicle's surroundings, such as when visibility is poor. Poor visibility, for example, may occur at night or due to an influence of weather.

Furthermore, the virtual scene may be rendered to provide a realistic representation of the surroundings. This may be based on the objects and/or types of objects selected by the occupant. As an example, this approach differs from merely providing a video feed, such as from a back-up assist system. Unlike the video feed, for example, the occupant can selectively determine which objects and/or types of objects to render to form the virtual scene. As another example, this approach further differs from merely rendering computer graphics stored in memory of a computing system, such as a conventional navigation system. The computer graphics, for example, may not realistically represent the vehicle's surroundings at the current point in time. Through the realistic representation, which may occur in real-time or near real-time, the occupant may be able to verify that the vehicle's sensors are correctly operating. For example, if the occupant sees that an object is X, e.g., a stop sign, at a location Y, with an orientation Z, and the vehicle renders a realistic representation of the object X, at the location Y, with the orientation Z, then the occupant may trust that the vehicle's sensors and corresponding systems are correctly operating.

The vehicle may include an autonomous drive system. The autonomous drive system may include or be in communication with the system for rendering the virtual scene. The autonomous drive system may operate the vehicle in an autonomous drive mode. The autonomous drive mode may be a fully autonomous drive mode, where the vehicle drives autonomously, via the autonomous drive system, without supervision or control by the occupant. The autonomous drive mode may be a partially autonomous drive mode, where the vehicle may drive autonomously, vie the autonomous drive system, but does so with supervision or some control by the occupant. The autonomous drive mode may satisfy one or more of the automation levels, as defined by the Society of Automotive Engineers, under J3016. As such, the autonomous drive system may operate the vehicle under one or more of the automation levels of J3016.

Through the realistic representation, via the virtual scene, the occupant may perceive and recognize stationary and/or dynamic objects around the vehicle. In doing so, the virtual scene may create a sense of trust between the occupant and the autonomous driving system. Through the virtual scene, the occupant may gain an appreciation for what the autonomous drive system is seeing and whether the autonomous drive system is correctly identifying objects and/or types of objects.

According to an aspect, the vehicle includes a system for rendering a virtual scene of the vehicle's surroundings. The virtual scene may include a default view. An occupant of the vehicle may select one or more objects and/or one or more types of objects for the system to render onto the default view. As such, the system allows the occupant to determine which objects and/or types of objects to additionally render on to the default view.

### BRIEF DESCRIPTION OF THE DRAWINGS

Fig. 1 illustrates a concept of visual odometry for extracting a point cloud according to an aspect.
Fig. 2 is a block diagram illustrating a system according to an aspect.
Fig. 3 is a flow diagram illustrating a method according to an aspect.

### DETAILED DESCRIPTION OF THE INVENTION

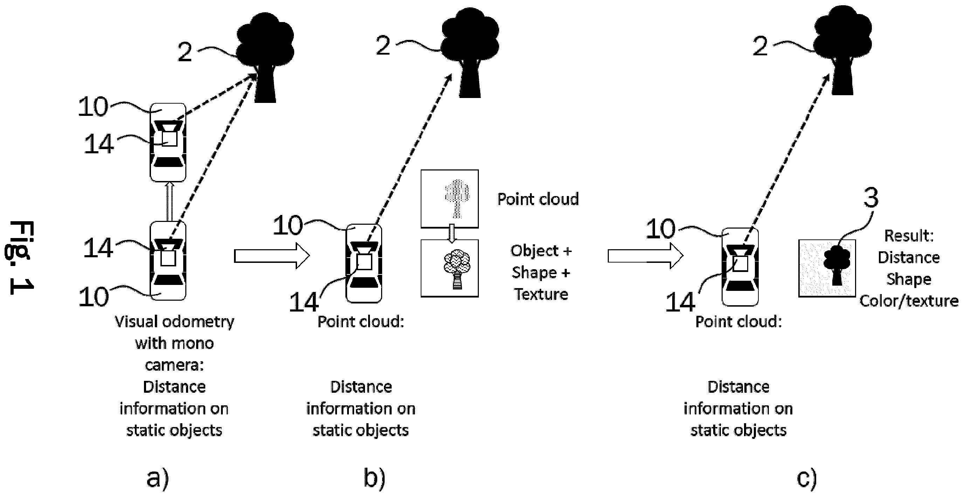

Fig. 1 illustrates a concept of visual odometry for extracting a point cloud according to an aspect. In particular, an example is illustrated when using a monocular camera 14 of a vehicle 10. Fig. 1 shows a top view of a vehicle 10 having a monocular camera 14. Of course, the camera 14 may be mounted to the vehicle 10 at any suitable position for capturing an environment in the front of the vehicle 10.

Fig. 1a) illustrates a motion in forward direction of the vehicle 10. As an example of a stationary object 2, a tree on a side of the road the vehicle 10 is driving on is illustrated. The camera 14 captures an image at each of two points in time between which the vehicle travels a certain distance. By using an image processing technique such as for example SfM ("Structure from Motion"), depth information, i.e. distance information, can be obtained from the captured images. For this purpose, parameters of the motion of the vehicle 10, such as the travelled distance, are taken into account. The motion parameters can be obtained using one or more sensors including, for example, a GNSS location sensor (GPS), a motion sensor, an acceleration sensor, an odometer, etc.

Fig. 1b) schematically illustrates how a point cloud is generated from the captured image and points belonging to the object 2 are extracted. Furthermore, parameters of the object such as shape and texture may be extracted from the image data.

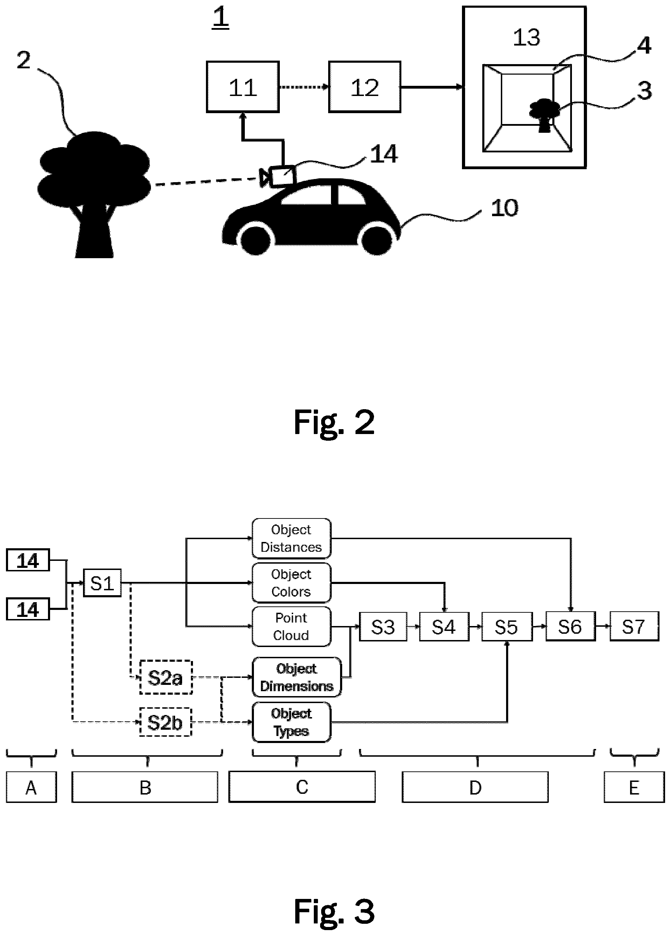

As a result, a three-dimensional model 3 of the object 2 may be rendered including distance information, dimensions, shape, color, and texture of the object. This model 3 may be displayed to an occupant of the vehicle 10. In the following, an exemplary system 1 and an exemplary method according to aspects described in the present disclosure will be discussed below in more detail with reference to Figs. 2 and 3.

A block diagram illustrating a system 1 according to an aspect for rendering a graphical representation of an environment of a vehicle 10 is depicted in Fig. 2. The system 1 comprises a camera unit 14 with at least one forward-facing monocular camera or at least one stereo camera. In particular, the cameras may be configured to capture color images. Additionally, the camera unit 14 may comprise at least one infrared camera, in particular for capturing images in dark conditions.

The camera unit 14 is mounted to the vehicle 10 and captures a video stream of images of the environment surrounding, such as in front of, the vehicle 10, including an object 2. In Fig. 2 a tree is illustrated as an example of a stationary object 2.

The camera unit 14 outputs the captured stream of images as a video signal to an ADAS ("advanced driver assistance system") 11 of the vehicle 10. The ADAS 11 comprises at least one processing unit which performs image processing on the video signal and outputs the processed image data to a cockpit computer 12 of the vehicle 10. The cockpit computer 12 comprises at least one processing unit which performs further processing on the image data received from the ADAS 11. Together, the processing units of the ADAS 11 and the cockpit computer 12 are configured for executing a method according to at least one aspect described in the present disclosure and output a rendered three-dimensional scene 4 of the environment of the vehicle 10 to a display unit 13 of the vehicle 10 such that an occupant of the vehicle 10 can view the scene 4 on a screen of the display unit 13. The displayed scene 4 includes a three-dimensional rendered model 3 of the object 2. An exemplary method carried out by the processing units will be described with reference to Fig. 3.

A flow diagram illustrating a method according to an aspect for rendering a graphical representation of an environment of a vehicle 10 is depicted in Fig. 3. The method comprise five main steps A to E. In a first a sensing step A, the camera unit 14 captures an image of an environment of the vehicle 10. As illustrated in Fig. 3, the camera unit 14 can comprise two cameras, e.g., a stereo camera for capturing an image with depth information.

A second object detection and classification step B of the method includes extracting S1 a three-dimensional point cloud from the captured image. For this purpose, each pixel or each predefined subset of pixels of the image is associated with depth information which may be obtained directly from a stereo image provided by the stereo camera 14. Alternatively, depth information may be provided by using an SfM ("Structure from Motion") algorithm, wherein pixels of an image are analyzed by comparing a current image with an image captured at an earlier point in time, wherein the camera 14 (i.e. the vehicle) has moved a known distance with a known heading.

A three-dimensional point cloud can be generated for all static points which have been recorded by the camera unit 14. The points of the objects may be extracted using visual odometry, for example by applying SfM.

Next, in step S2a, an object 2 is detected in the generated point cloud. Alternatively, an object 2 may be detected directly from the image captured by the camera 14 (step S2b). In particular, objects may be detected by applying an image recognition algorithm.

In a parameter extraction step C of the method, one or more parameters are extracted from the point cloud. Alternatively or additionally, some or all parameters may be extracted directly from the captured image provided by the camera unit 14. The extracted parameters may include object distances, object colors, object textures, object dimensions, and/or object types. These parameters may be used in some of the following processes in order to ender a virtual object 3.

A rendering step D of the method includes a process S3 of extracting points which belong to an object 2 from the point cloud. By extracting points of the point cloud which belong to an object 2, a subset of points may be generated.

A process S4 defines, for each detected object 2, colors and/or textures of the surfaces of the object 2, based on the captured image and the extracted points of the object 2.

In a process S5 each detected object 2 may be tagged with the extracted object type. Tagging an object may be performed in order to allow a user of the system 1 to select which kind of objects shall be displayed in the rendered scene 4.

Furthermore, artificial intelligence may be applied for determining a type of object and for potentially increasing rendering rates and/or efficiencies of the image processing. E.g., if the vehicle has previously traversed a path/route, the vehicle may recall a previously detected object X, at a specific location Y. On subsequent traversing of the path/route, the vehicle may only need to partially process the data from the detection of object X to conclude that object X is still present at location Y. As a result, the need, at least in part, to tag the type of the object from new may be eliminated.

According to another variation of artificial intelligence, a past successful detection and type tagging of an object may be applied to new/unknown objects, which have not been previously encountered. Thus, by learning object types and object parameters and tagging this information accordingly, new objects with similar features may be identified and classified more efficiently and/or more rapidly. Such image recognition processes may be assisted by artificial intelligence which may learn and improve its performance each time an object is detected and classified.

In another process S6, a three-dimensional virtual object 3 of each object 2 is rendered in a three-dimensional scene 4 based on the extracted object distances. Furthermore, the color and/or texture information of the object's 2 surfaces may be used for rendering the three-dimensional virtual object 3 in order to generate a more detailed and/or more realistic virtual model 3 of the object 2.

Finally, in a last visualization step E of the method, the rendered three-dimensional scene 4 is output to a display unit 13 such that an occupant of the vehicle 10 may view the scene 4 on a screen of the display unit 13. In particular, a rendered scene 4 of a surrounding environment of the vehicle 10 may be displayed to the occupant, wherein static and/or dynamic objects may be highlighted. For examples, lanes and/or road surface marking such as line may be highlighted. Thus, the occupant can verify that the ADAS 11 correctly detects and recognizes lanes such that a feeling of trust into the system 1 can be generated which may be important when operating the vehicle 10 in an autonomous driving mode. Objects, obstacles, buildings, other vehicles, etc. can be rendered and displayed as they occur in the real world with full depth and color information. Furthermore, the appearance of the virtual scene 4 can be designed and displayed according to preferences of the occupant without the need to display the actual video data. Moreover, actual video data may be combined with rendered objects 3.

When using a stereoscopic camera 14, moving objects may be detected without the need of additional sensor data for detecting a distance to the objects.

Furthermore, method step D, in particular the process of rendering the three-dimensional virtual object 3, may comprise intermediary image processing steps in which the point cloud is converted, for example, into a polygon mesh or a triangle mesh model. By converting the point cloud into such mesh models, surfaces of the objects may be generated for rendering including color and/or texture.

The features described in in the present disclosure may be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. A method for rendering a representation of an environment of a vehicle (10), the method comprising:
a sensing step (A) including capturing, by a camera unit (14), an image of an environment of the vehicle (10);
an object detection and classification step (B) including extracting (S1) a point cloud from the captured image;
a parameter extraction step (C) including extracting one or more of the following parameters from the point cloud: object distances, object colors, object dimensions, and/or object types;
a rendering step (D) including:
extracting (S3) points which belong to an object (2) from the point cloud;
defining (S4), for each detected object (2), at least one of colors and textures of the object (2), based on the captured image and the extracted points of the object (2);
tagging (S5) each detected object (2) with the extracted object type; and
rendering (S6), for each detected object (2), a three-dimensional virtual object (3) in a three-dimensional scene (4) based on the extracted object distances;
a visualization step (E) including outputting the three-dimensional scene (4) to a display unit (13).

2. The method according to claim 1, wherein:
the sensing step (A) further includes detecting distance information using a radar sensor, a LiDAR sensor, and/or a sonar sensor; and
the distance information is fused with the captured image to extract object distances.

3. The method according to claim 1 or claim 2, wherein:
the object detection and classification step (B) further includes detecting (S2a) objects (2) in the generated point cloud; and
the parameter extraction step (C) includes extracting the object dimensions and the object types from the detected objects (2).

4. The method according to claim 1 or claim 2, wherein:
the object detection and classification step (B) further includes detecting (S2b) objects (2) directly from the captured image; and
the parameter extraction step (C) includes extracting the object dimensions and the object types from the detected objects (2).

5. The method according to at least one of the preceding claims, wherein:
the sensing step (A) further includes detecting a position and an orientation of the vehicle (1) and/or the camera unit (14) when capturing the image.

6. The method according to at least one of the preceding claims, wherein:
the object detection and classification step (B) further includes extracting static points in the image by comparing the captured image with another image captured at an earlier point in time; and
the three-dimensional point cloud is generated from the static points.

7. The method according to at least one of the preceding claims, wherein:
the rendering step (D) further includes calculating a textured surface of the three-dimensional virtual objects (3) by fusing distance information and point cloud information of each detected object (2).

8. The method according to at least one of the preceding claims, wherein:
the rendering step (D) further includes fusing color information extracted from the captured image with the rendered three-dimensional virtual object (3).

9. The method according to claim 5, wherein:
the rendering step (D) further includes performing perspective transformation of the rendered three-dimensional virtual objects (3) such that the virtual objects (3) are displayed as seen from a point of view of an occupant of the vehicle (10).

10. A system (1) for rendering a graphical representation of an environment of a vehicle (10), the system (1) comprising:
a camera unit (14) for capturing an image of an environment of the vehicle (10);
a processing unit (11, 12) configured to execute:
an object detection and classification step (B) including extracting (S1) a point cloud from the captured image;
a parameter extraction step (C) including extracting one or more of the following parameters from the point cloud: object distances, object colors, object dimensions, and/or object types; and
a rendering step (D) including:
extracting (S3) points which belong to an object (2) from the point cloud;
defining (S4), for each detected object (2), at least one of colors and textures of the object (2), based on the captured image and the extracted points of the object (2);
tagging (S5) each detected object (2) with the extracted object type; and
rendering (S6), for each detected object (2), a three-dimensional virtual object (3) in a three-dimensional scene (4) based on the extracted object distances; and
a display unit (13) for displaying the three-dimensional scene (4).

11. The system (1) according to claim 10, wherein the camera unit (14) comprises at least a forward-facing monocular camera or stereo camera.

12. The system (1) according to claim 10 or claim 11, further comprising a position sensor for detecting a position and an orientation of the vehicle (10) and/or the camera unit (14) when capturing the image.

13. The system (1) according to at least one of claims 10 to 12, further comprising a radar sensor, a LiDAR sensor, and/or a sonar sensor, for detecting a distance between the vehicle (10) and the object (2).

14. The system (1) according to claim 12, wherein the processing unit is configured for performing perspective transformation of the rendered three-dimensional virtual objects (3) based on the detected position and an orientation of the camera unit (14) such that the display unit (13) displays the virtual objects (3) as seen from a point of view of an occupant of the vehicle (10).

15. A vehicle (10) comprising a system (1) according to at least one of claims 10 to 14.
